**Europäisches Patentamt**

**European Patent Office**

**Office européen des brevets**

(19)

(11) Publication number: **0 122 572**
A2

(12) # EUROPEAN PATENT APPLICATION

(21) Application number: **84103915.9**

(22) Date of filing: **07.04.84**

(51) Int. Cl.³: **B 01 J 29/06**
**B 01 J 21/16, C 10 G 11/05**
**C 10 G 47/20**

(30) Priority: **13.04.83 US 484435**

(43) Date of publication of application:
**24.10.84 Bulletin 84/43**

(84) Designated Contracting States:
**BE DE FR GB IT NL SE**

(71) Applicant: **W.R. GRACE & CO.**
**Grace Plaza 1114 Avenue of the Americas**
**New York New York 10036(US)**

(72) Inventor: **Lussier, Roger Jean**
**4018 Jay Em Circle**
**Ellicott City Maryland 21043(US)**

(72) Inventor: **Surland, George John**
**2486 Daisy Road**
**Woodbine Maryland 21797(US)**

(74) Representative: **UEXKÜLL & STOLBERG Patentanwälte**
**Beselerstrasse 4**
**D-2000 Hamburg 52(DE)**

(54) Catalysts and catalyst supports.

(57) Catalysts which comprise or contain caustic leached spinal/mullite are found to possess a particularly high activity and stability for the catalytic conversion of hydrocarbons.

EP 0 122 572 A2

-1-

The present invention relates to the preparation of catalyst supports and catalysts used for the conversion of hydrocarbons, and more particularly to the preparation of hydrocarbon cracking and hydroprocessing catalysts that are particularly effective for the processing of residual hydrocarbon feedstocks.

Catalysts which are used for the conversion of hydrocarbons typically comprise particulate inorganic oxide supports combined with catalytically active metals and/or crystalline zeolites. Hydroprocessing catalysts generally contain Group VI and/or Group VIII metals combined with a formed support component which comprises alumina or silica-alumina. Cracking catalysts comprise crystalline zeolites such as Type Y faujasite or ZSM zeolites which are prepared by combining the crystalline zeolite in finely divided form with an appropriate inorganic oxide matrix which comprises silica, alumina and/or clay. Clay, due to its low cost and availability, is a particularly attractive raw material for the preparation of catalysts.

U.S. 2,939,764 describes a method for preparing artificial bauxite wherein kaolin clay is calcined at a temperature of about 900 to 1000°C and then treated with sodium hydroxide solution to leach or remove silica as a soluble sodium silicate.

U.S. 3,932,268 describes fluid cracking catalysts which comprise an ion exchanged faujasite type Y zeolite and an amorphous matrix wherein the matrix comprises the alumina-silica residue of caustic leached kaolin clay. The zeolite component is prepared in situ within a preformed calcined clay particle by the treatment of calcined kaolin microspheres with caustic. The remaining alumina-silica residue which is not converted to zeolite remains and serves as a catalyst matrix.

U.S. 4,235,753 describes a method for preparing shaped crystalline aluminosilicate containing particles wherein calcined clay particles are reacted in an aqueous alkaline medium which contains aluminosilicate nucleation centers.

In recent years the refining industry has been processing increasing amounts of metal containing residual hydrocarbon feedstocks. The metals, primarily vanadia and nickel, tend to deactivate catalysts, and thereby increase the overall cost of processing residual feedstocks. Accordingly, a significant requirement exists for hydrocarbon conversion catalysts which are resistant to the deactivating effects of vanadia and nickel and which may be prepared from readily available inexpensive raw materials such as kaolin.

It is therefore an object of the present invention to provide improved hydrocarbon conversion catalysts and catalyst components.

It is another object to provide cracking catalysts which are active for the conversion of residual hydrocarbon feedstocks to valuable lower molecular weight products such as gasoline and diesel fuel.

It is another object to provide hydroconversion catalysts and catalyst supports which are economical to prepare on a commercial scale and which are particularly resistant to the deactivating effects of metals contained in residual type feedstocks.

These, and still further objects of the present invention will become readily apparent to one skilled in the art from the following detailed description and specific examples.

Broadly, our invention contemplates catalysts, catalyst components, and catalyst supports which contain or comprise caustic leached spinel compositions which may contain substantial quantities of mullite.

More specifically, we have found that valuable catalysts and catalyst components may be prepared from a caustic leached spinel and mullite (hereinafter frequently referred to as CLS/mullite) which has a high concentration of acid sites that are resistant to hydrothermal deactivation.

The preparation of calcined leached kaolin clays (including spinels) is generally disclosed in the prior art. However, the CLS/mullite used in the practice of the present invention is particularly characterized by the ability to retain a high degree of catalytic activity as measured by acid-site stability, i.e. retention of acid-sites subsequent to hydrothermal treatment. This high degree of stability is obtained by careful control of the caustic leaching conditions, and in particular it is found that where the spinel (calcined kaolin) is leached (reacted with sodium hydroxide solution) for a period in excess of about 6 hours, a substantial amount of hydrothermal stability is lost. Accordingly, the CLS/mullite contemplated for use in the present invention is obtained by the following process.

(1) Kaolin, which has the general composition 2.0 $SiO_2:Al_2O_3$: 0.01 to 0.10 $MO:H_2O$ wherein Mo represents metal oxides such as iron and titanium, is heated to a temperature of about 900 to 1300°C for about one-tenth to 6 hours to obtain a reactive spinel/mullite type compound having a spinel to mullite mole ratio of from about 1:0 to about 1:0.5. Temperatures of from about 900 to 1050°C result in the formation of a composition which is essentially 100% spinel, whereas temperatures of 1250 to 1300°C result in the formation of compositions which contain up to 50% mullite. Calcination temperatures of 900 to 1200°C result in the preferred spinel-mullite composition in which the spinel phase comprises 50 to 100 mole percent of the composition and the mullite phase comprises 0 to 50 mole percent.

(2)   The reactive spinel/mullite obtained in step (1) is then combined with an alkali metal hydroxide solution, preferably sodium hydroxide solution in amounts which provide a spinel-mullite/NaOH/$H_2O$ reaction mixture having the following weight ratio ranges: 50 to 100 g spinel-mullite: 1.0 to 60 g NaOH: 65 to 1000 g $H_2O$.

(3)   The reaction mixture of step (2) is then heated at a temperature of about 50 to 100°C for a period of one-quarter to 6 hours to extract (leach) from about 5 to 75 weight percent of the silica from the spinel as soluble sodium silicate.

(4)   Subsequent to heating in step (3), the caustic leached spinel (CLS)/mullite is recovered by filtration and is washed with water and exchanged with mineral acids, ammonium or rare earth salts to remove $Na^+$ and obtain a finely divided particulate CLS/mullite which has a silica to alumina mole ratio of from about 0.50 to 1.7, a nitrogen pore volume of 0.25 to 0.70, and an average pore diameter of from 50 to 100 A°, and an x-ray diffraction pattern very similar to gamma alumina.

Depending on the time and temperature of the initial calcination, varying amounts, i.e. 0 to 100% and preferably 0 to 50%, of the spinel may be converted to mullite, as determined by crystalographic X-ray diffraction analysis. As long as the calcination conditions (i.e. time, temperature) are such that the silica removed from the structure does not crystallize, a high surface area product which contains less than 0.20% $Na_2O$ is prepared. Since mullite is formed and decomposes at a higher temperature than the spinel phase, substantial conversion, ie. 10 to 50%, to mullite would be advantageous for use under severe process conditions.

To determine whether the CLS/mullite possesses the desired acid site concentration, a sample of CLS is subjected to temperature programmed desorption, using tertiary butyl amine, which is described as follows.

About 100 mg of catalyst is pretreated at 380°C in flowing helium (He) (110 cc/min.) for one and one-half hours. After cooling to room temperature in flowing He, the catalyst is exposed to a He carrier stream (80 cc/min.) which passes through a tertiary butyl ammonium (TBA) saturator maintained at ice-water temperature until breakthrough of TBA is detected by a thermal conductivity (TC) cell. Excess TBA is then swept from the catalyst surface in flowing He and is assumed to be eluted when the TC response returns to baseline (about 5 minutes). The catalyst is then heated using a 12°C/min. rate to 380°C in a flow of He (80 cc/min.). The resulting chromatogram consists of two (2) desorption peaks: a low temperature alpha peak associated with physisorbed TBA, and a high temperature beta peak associated with chemisorbed TBA. The area of the beta peak is a measure of the amount of "strong" acidity; the temperature of the beta peak maximum is an index of acid site strength. Planimetered beta peak areas, corrected to a dry basis using loss on ignition at 954°C, were employed in the calculation of total strong acidity and acid site density.

To establish the resistance to hydrothermal degradation of the acid site content, i.e. stability, samples of CLS/mullite are typically heated to a temperature of 732 to 843°C in the presence of saturated steam for a period of 5 to 12 hours. The acid site concentration is determined both prior and subsequent to hydrothermal deactivation, and it is found that the preferred CLS/mullite used in the practice of the present invention will retain at least about 70 percent of the acid-sites, and preferably from about 70 to 95 percent of the initial acid sites.

As indicated above, the CLS/mullite of the present invention is advantageously used in the preparation of hydrocarbon conversion catalysts and catalyst supports. In a preferred practice of the invention, the CLS/mullite is included as a component of fluid cracking catalysts (FCC) which comprises a zeolite such as type Y faujasite or ZSM zeolite, an inorganic oxide binder, such as silica alumina, silica alumina sols and hydrogels, the preparation of which are generally described in the following patents: U.S. 3,957,689, U.S. 3,912,619, U.S. 3,650,988, U.S. 4,144,194, and Canadian 967,136. Zeolites which may be included in the catalyst compositions are described in U.S. 3,293,192, 3,449,070, 3,402,996, 3,607,043, 3,676,368, 3,639,099, 3,808,326 and 4,164,551.

The techniques described in the aforesaid patents may be used in the preparation of catalysts including cracking catalysts which contain the CLS/mullite of the present invention. In a particularly preferred
catalyst, the CLS/mullite is combined with a rare
earth exchanged type Y zeolite, an alumina sol binder,
and from about 20 to 80 parts by weight kaolin clay.
Using the technique described in Canadian patent
967,136, catalysts which contain from about 5 to 50
weight percent zeolite, from about 10 to 20 percent
alumina sol binder, from about 5 to 80 percent by
weight CLS/mullite, from about 0 to 80 percent by
weight kaolin clay are found to be particularly
effective for the conversion of residual type
hydrocarbons which contain substantial quantities of
nickel and vanadium; sulfur and/or nitrogen.

In addition to using the CLS/mullite contemplated
herein as a component for fluid cracking catalysts, it
is also contemplated that the CLS/mullite may be
formed into particles having a desired shape and size
which are useful for the preparation of
hydroprocessing catalysts. Typically, the CLS/mullite
is formed using conventional extrusion, pilling,
granulation, or sphere-forming techniques.

The hydroprocessing catalyst supports obtained
using the CLS/mullite either alone or in combination
with alumina and/or silica-alumina sols and gels,
typically will possess the following characteristics:
a surface area of 150 to 350 $m^2$/g; a total pore
volume 0.30 to 1.00 cc/g; a pore volume distribution
wherein 0 to 0.1 cc/g is pores less than 20 A° in
diameter, 0.20 to 0.60 cc/g in pores less than 100 A°
in diameter, 0.05 to 0.20 cc/g in pores from 100 to
1000 A° in diameter, and 0.10 to 0.50 cc/g in pores
greater than 1000 A° in diameter. The formed
CLS/mullite-comprising particles may have particle
size ranging from about 0.5 to 10 mm. In a

-8-

particularly preferred form, the CLS/mullite is formed
into spheres having a size as small as 0.5 to a size
as large as 4 mm.

The hydroprocessing catalysts which may be
obtained using the CLS/mullite supports of the present
invention typically contain promoter metals selected
from Group VI and Group VIII of the Periodic Table.
In particular, it is found that metals such as cobalt,
moly, nickel and tungsten, which are incorporated in
the catalyst in amounts ranging from 0.5 to as much as
20 percent by weight are particularly effective for
the hydroprocessing of residual type hydrocarbon
feedstocks. Typically, these feedstocks, which
contain substantial quantities of nickel and vanadia
as well as sulfur and nitrogen, may be demetallized,
desulfurized and/or denitrogenized using the catalysts
contemplated herein. Conventional techniques for
demetallization as well as desulfurization and
denitrogenation involve treatment of the feedstock
with hydrogen at pressure of 10 to 700 atm and
temperatures of 300 to 600°C in the presence of the
catalyst described herein.

Having described the basic aspects of the present
invention, the following examples are given to
illustrate specific embodiments thereof.


## Example 1

This example shows that the starting kaolin must
be calcined under conditions such that the 1750°F
exotherm observed in a DTA (differential thermal
analysis) of kaolin is substantially reduced or
eliminated. Samples of kaolin clay were heat treated
for the time and temperature indicated in Table I.
The samples were then aged at 100°C under reflux or in sealed teflon bottles for the indicated time using different levels of NaOH. Calcined samples which still exhibited a substantial exotherm at about 1750°F were not reactive as indicated by the low surface areas. The conversion of metakaolin to the spinel-like phase occurs fairly slowly at 1700°F (about 2 hours or more), but is quite rapid (about 5 minutes) at 2000°F. Surface area of the caustic leached product is also dependent on caustic level, with increasing caustic level giving greater $SiO_2$ removal and hence increased surface areas.

TABLE I

Effect of Clay Calcination Temperature and Time on Caustic Leached Spinel

| Sample No. | Clay Calcination | Time at Reflux (Hrs.) | Caustic Leach Conditions (g NaOH/g Clay/g $H_2O$) | Surface Area ($m^2$/g) | 1750°F on Exotherm |
|---|---|---|---|---|---|
| 1 | 3 hrs. @ 1350°F | 2 | 0.27/1/4.0 | 4 | Yes |
| 2 | 1/2 hr. @ 1650°F | 2 | 0127/1/4.0 | 23 | Yes |
| 3 | 1 hr. @ 1700°F | 2 | 0.27/1/4.0 | 18 | Yes |
| 4 | 1/4 hr. @ 1800°F | 2 | 0.23/1.4.0 | 46 | Yes |
| 5 | 1/2 hr. @ 1800°F | 2 | 0.23/1/4.0 | 85 | Small |
| 6 | 3/4 hr. @ 1800°F | 2 | 0.23/1/4.0 | 125 | None |
| 7 | 1 hr. @ 1800°F | 2 | 0.23/1/4.0 | 108 | None |
| 8 | 1 1/2 hrs. @ 1800°F | 2 | 0.23/1/4.0 | 127 | None |
| 9 | 1 hr. @ 1800°F | 2 | 0.63/1/4.0 | 204 | None |
| 10 | 2 hrs. @ 1800°F | 1 | 0.63/1/4.0 | 312 | None |
| 11 | 4 hrs. @ 1800°F | 1 | 0.63/1/4.0 | 279 | None |
| 12 | 6 hrs. @ 1800°F | 1 | 0.63/1/4.0 | 263 | None |

## Example 2

This example shows that higher caustic levels with less water produces a somewhat higher surface area caustic leached spinel. Kaolin clay was calcined for 1 hour at 1800°F and then added to sodium hydroxide solutions at weight ratios given in Table II. After 2 hours of boiling under reflux the slurries were filtered and then washed on the filter twice with 5 g hot deionized water per g of starting clay. Thirty g of each of these products was then exchanged 3 times with 15 g ammonium sulfate in 300 g water. After each exchange the product was washed with hot deionized water, and oven dried. As shown by the data, even the lower surface area materials have substantial cracking activity after hydrothermal deactivation.

## TABLE II

Effect of Caustic and Water Level on Caustic Leached Spinel Product

| Sample No. | Caustic Leach Conditions (g NaOH/g Clay/g $H_2O$) | Surface Area, $m^2/g$ | MA[1] |
|---|---|---|---|
| 1 | 0.36/1/2.7 | 137 | 59 |
| 2 | 0.36/1/3.4 | 108 | 40 |
| 3 | 0.45/1/2.7 | 152 | 51 |
| 4 | 0.45/1/3.4 | 130 | 54 |
| 5 | 0.63/1/2.7 | 204 | 55 |
| 6 | 0.63/1/3.4 | 181 | 54 |

1. Microactivity at 930°F, 16 WHSV, 3 C/O after an 8 hour, 1350°F, 100% steam treatment on West Texas Heavy Gas Oil, volume % conversion.

## Example 3

This example shows that sodium ($Na_2O$) can be substantially eliminated from the caustic leached spinel by reaction with dilute sulfuric acid without substantial loss in alumina content of the product. 250 g of kaolin clay (calcined 1 hour at 1800°F) was added to 675 ml $H_2O$ containing 157 g NaOH and boiled one-half hour under reflux. The slurry was filtered and the caustic leached product was washed with hot deionized $H_2O$. After this wash the filter cake has about 4.5-5.5% $Na_2O$ and 76 weight % $Al_2O_3$. Samples of the above filter cake, equivalent to 50 g of the original calcined clay were reslurried in 200 ml solution of varying $H_2SO_4$ concentration for one-half hour at approximately 150°F, filtered and washed with hot deionized $H_2O$. The data in Table III indicate that most of the $Na_2O$ can be removed without substantial loss in the $Al_2O_3$ content of the caustic leached product.

## TABLE III

Effect of Acid Level on $Na_2O$ Removal in Caustic Leached Spinel

| Sample No. | Acid Reslurry Conditions | wt.% $Na_2O$ | wt.% $Al_2O_3$ |
|---|---|---|---|
| 1 | 200 ml 0.50M $H_2SO_4$/50g original spinel | 0.093 | 72.56 |
| 2 | 200 ml 0.40M $H_2SO_4$/50g original spinel | 0.12 | 73.69 |
| 3 | 200 ml 0.30M $H_2SO_4$/50g original spinel | 0.052 | 73.84 |
| 4 | 200 ml 0.20M $H_2SO_4$/50g original spinel | 0.038 | 74.87 |
| 5 | 200 ml 0.10M $H_2SO_4$/50g original spinel | 1.14 | 76.23 |

## Example 4

This example shows the catalytic cracking activity which is retained by the CLS after thermal and hydrothermal deactivation. The data in Table IV indicates the caustic leached spinel, prepared as described below, loses little or no catalytic activity after a two hour 1800°F thermal treatment or a 1550°F, 5 hour, 100% steam deactivation. It is noted for comparative purposes that an all-synthetic 25% $Al_2O_3$ silica alumina cracking catalyst has a typical MA of about 27 after a 2 hour, 1800°F thermal treatment. This sample was prepared by addition of 600 g kaolin clay (calcined 1 hour at 1800°F) to a solution of 376.8 g NaOH in 1.62 liters deionized $H_2O$. After boiling 1 hour under reflux, the caustic leached spinel was filtered, and washed 3 times with 1.0 liters hot deionized $H_2O$. The filter cake was redispersed in 2.5 liters 1M $H_2SO_4$, filtered, washed on the filter 3 times with 2.0 liters hot deionized $H_2O$ and dried at 250°F. The dried product was crushed through a 30 mesh screen and then given the indicated thermal or hydrothermal treatments.

-16-

TABLE IV

Catalytic Cracking Activity of Caustic Leached Spinel

| Sample No. | Deactivation Pre-Treatment | MA[1] |
|:---:|:---|:---:|
| 1 | 2 hrs. @ 1250°F | 58.0 |
| 2 | 2 hrs. @ 1400°F | 66.9 |
| 3 | 2 hrs. @ 1500°F | 55.5 |
| 4 | 2 hrs. @ 1600°F | 63.2 |
| 5 | 2 hrs. @ 1800°F | 66.0 |
| 6 | 5 hrs. @ 1500°F, 100% steam | 60.4 |
| 7 | 5 hrs. @ 1550°F, 100% steam | 56.4 |

1. Microactivity at 930°F, 16 WHSV, 3 C/O after the indicated thermal or hydrothermal treatment, volume % conversion.

## Example 5

This example shows that commercially calcined clays which do not have a significant exotherm at about 1750°F as measured by DTA are useful for producing the caustic leached spinel. Table V summarizes data on caustic leaching of various commercially available calcined kaolin clays. For all three samples, leaching with caustic increased alumina content from about 42 to about 70%, and loss of silica from the structure increased the surface area to greater than 300 $m^2$/g. It is believed that these clays are calcined at approximately 1900°F for about 10 minutes.

### TABLE V

#### Caustic Leaching of Commercially Available Calcined Clays

| Commercial Clay Sample No. | Leach Conditions | SA* | $Al_2O_3$ (wt.%) |
|---|---|---|---|
| 1 | 31.4 g NaOH/50 g clay, 1 hr. at reflux | 452 | 77.62 |
| 2 | " | 304 | 75.48 |
| 3 | " | 304 | 71.81 |

*SA = Surface Area, $m^2$/g as determined by $N_2$ adsorption.

-19-

## Example 6

This example shows that reflux time can be very brief. 200 g kaolin clay (calcined 1 hour at 1800°F) was added to 540 ml $H_2O$ containing 125.6 g NaOH and 400 g of the same material also added to 1,080 ml $H_2O$ containing 201.0 g NaOH. The slurries were boiled under reflux with portions removed after the indicated time at reflux. After filtering and washing, these samples were exchanged to low $Na_2O$ with 3 exchanges at 150°F using 20 g $(NH_4)_2SO_4$ per 50 g clay starting material in 250 ml hot D.I. $h_2O$. After each exchange the product was washed 1 time with 250 ml hot D.I. $H_2O$ and 3X after the third exchange. The results, given in Table IX, indicate very good catalytic cracking activities even at very short reflux times.

TABLE VI

Effect of Short Reflux Time on Surface Area of
Caustic Leached Spinel

| Sample No. | Time at Reflux (Hrs.) | g NaOH/G Clay/g $H_2O$[1] | SA[2] | MA[3] |
|---|---|---|---|---|
| 1 | 1/4 | 0.5/1.0/2.7 | 190 | 55 |
| 2 | 1/2 | " | 182 | 54 |
| 3 | 3/4 | " | 178 | 52 |
| 4 | 1 | " | 168 | 52 |
| 5 | 1 1/4 | " | 161 | 55 |
| 6 | 1 1/2 | " | 156 | 52 |
| 7 | 1/4 | 0.63/1.0/2.7 | 192 | 46 |
| 8 | 1/2 | " | 212 | 52 |
| 9 | 3/4 | " | 215 | 60 |
| 10 | 1 1/4 | " | 199 | 58 |
| 11 | 1 1/2 | " | 190 | 55 |

1. Clay used was kaolin calcined 1 hour at 1800°F.

2. Surface Area, $m^2/g$.

3. Microactivity data after $(NH_4)_2SO_4$ exchange to less than 0.1% $Na_2O$ after an 8 hour, 1350°F, 100% steam treatment at 930°F, 16 WHSV, 3 C/O, vol. % conversion.

## Example 7

This example shows the surface properties of the caustic leached spinel powder. The caustic leached spinel was prepared by adding 100 g kaolin clay (calcined 1 hour at 1800°F) to 196 ml solution containing 50.4 g potassium hydroxide and hot aging 2 hours in a sealed teflon bottle. The product was filtered, washed 2 times with hot deionized water and oven dried overnight at 250°F. The dried product was exchanged 3 times with 50 g $(NH_4)_2SO_4$ in 500 ml $H_2O$ for 1/2 hour at 160°F. The product was washed 1 time with 1 liter hot deionized $H_2O$ after the first and second exchanges, and 3 times with 1.0 liters after the third exchange to remove residual salts.

The data in Table VII summarizes the surface/hydrothermal properties of the caustic leached spinel.

TABLE VII

Surface/Hydrothermal Stability Properties of Caustic Leached Spinel

| Sample $N_2$ (treatment) | 1 (2 hr. @ 1000°F) | 2 (8 hr. @ 1350°F 100% steam) |
|---|---|---|
| SA, total | 182 | 164 |
| Total $N_2$ PV | 0.756 | 0.780 |
| $N_2$ PV 600 A° | 0.385 | 0.428 |
| $N_2$ PV 20-600 A° | 0.371 | 0.352 |
| $N_2$ PV 20 A° | 0 | 0 |
| SA in 20-100 A° Pores (%) | about 83 | about 81 |

SA = surface area $(m^2/g)$

PV = pore volume (cc/g)

$N_2$ PV 600 A° = nitrogen pore volume in pores greater than 600 A° in diameter.

## Example 8

This example describes the use of the caustic leached spinel as an additive to $SiO_2$ sol bound catalysts as disclosed in U.S. 3,867,308. 11,250 g of kaolin was added to a solution of 7,065 g NaOH in 30 liters $H_2O$. The slurry was boiled one hour, filtered, washed twice with 10 gallons hot $H_2O$. After oven drying the solid was reslurried in 30 l 0.50M $H_2SO_4$ for one-quarter hour at 150°F, filtered, washed twice with 10 gallons hot $H_2O$, redispersed in 20 gallons hot $H_2O$, refiltered and oven dried. 750 g dry basis of the above and 900 g $SiO_2$-$Al_2O_3$ basis Na-Y were dispersed in the minimum $H_2O$ in a blender, the pH adjusted to 4.0 using mixed $H_2SO_4$/alum solution and this slurry added to a slurry of 25.3 lbs. pH 3.0 $SiO_2$ sol (about 10% $SiO_2$) and 2200 g dry basis kaolin clay. After mixing the two slurries, the product was spray dried immediately.

## Example 9

This example describes the use of the caustic leached spinel as an additive to alumina sol bound catalysts. 600 g of low $Na_2O$ (about 0.3 wt.%) calcined rare earth Y zeolite, 650 g of the caustic leached spinel made in a similar manner to that in example 17 were blended together and added to 2,128 g of aluminum chlorhydroxide (23.5% $Al_2O_3$) and 2,300 g dry basis kaolin clay as described in Canadian 967,136. The slurry was spray dried and the product calcined 1 hour at 1000°F. This product had good physical properties (Average Bulk Density/CD 0.76/0.81, Davison Index/Jersey Index 21/1.8), and excellent cracking activity (84.1 versus 67.8 for standard commercial catalyst).

## Example 10

This example shows that when the caustic leached spinel product is reslurried in acidic media, gelation can be brought about by addition of a base. Though gelation does not change the pore structure or cracking activity, it does produce a highly porous gel which filters and washes readily so that soluble salts can be readily removed. Many of the finer caustic leached spinels become peptized and difficult to filter upon reslurrying in acid due to slow filtration or they pass through filter paper. 11,250 g of kaolin was added to 30; 1 $H_2O$ containing 7,065 g NaOH and boiled 1 hour at constant volume. After filtering and washing twice with 10 gallons hot $H_2O$, the filter cake was reslurried in 30 1 0.75M $H_2SO_4$. A portion was filtered and virtually all the product went through the filter paper. A separate portion of this slurry was treated with 30% $NH_4OH$ to pH 9.5, was filtered and then washed with hot $H_2O$. This product had a surface area of 310 $m^2/g$, % $Al_2O_3$ of 69.84, % $SO_4$ of 0.23 and % $Na_2O$ of 0.12. This sample had a microactivity of 60.9 at 930°F, 16 Weight Hour Space Velocity, 3 C/O after an 8 hour, 1350°F, 100% steam treatment.

## Example 11

This example shows that the caustic leached spinel has substantial ability to resist deactivation by metals. 500 g kaolin clay was calcined 1 hour at 1800°F, boiled under reflux for 1 and one-quarter hours in 1.35 1 $H_2O$ containing 314 g NaOH, filtered, and washed twice with 1.5 l hot $H_2O$. The product was reslurried in 2 l 0.5M $H_2SO_4$ for one-half hour at 150°F, filtered, washed 3 times with one l hot $H_2O$, reslurried in one l pH 9.0 $H_2O$ (adjusted with 14% $NH_3$) for one-half hour, filtered and washed twice with 2 l hot $H_2O$. There samples of the above product were calcined, impregnated with Ni+V in pentane solution and recalcined prior to steam deactivation and activity tests. The results, given in Table XIV, show substantial activity retention even at a high (1%) metals level.

## TABLE VIII

### Effect of Ni+V on Activity of Caustic Leached Spinel

| Sample No. | Wt.% Ni+V (1 Ni/2 V) | Microactivity[1] |
|---|---|---|
| 1 | 0 | 68.0 |
| 2 | 0.50 | 61.0 |
| 3 | 1.00 | 54.9 |

1. Microactivity catalytic cracking at 930°F, 16 WHSV, 3 C/O after an 8 hour, 1350°F, 100% steam treatment, volume % conversion.

-25-

## Example 12

This example shows that the caustic leached spinel can be produced with high surface areas at verying alumina content by changing the caustic leaching time. Separate samples of kaolin clay (calcined 1 hour at 1800°F) were boiled for various amounts of time under reflux at 0.63 g NaOH/g calcined clay/2.7 g $H_2O$. The products were filtered, washed twice with 5 g $H_2O$/g clay, reslurried in 4 ml 0.5M $H_2OSO_4$/g clay for one-half hour at 150°F, filtered, washed twice with 5 g $H_2O$/g clay and oven dried at 250°F. The data in Table XV indicate the caustic leached spinel produced has decreasing amounts of alumina as reflux time is extended, while still maintaining much of the surface area formed after 1 hour at reflux.

## TABLE IX

Use of Increased Reflux Time to Reduce $Al_2O_3$
Content in Caustic Leached Spinel

| Sample No. | Time at Reflux (Hrs.) | Wt.% $Al_2O_3$ | Surface Area $(m^2/g)$ |
|---|---|---|---|
| 1 | 1 | about 70.0 | about 270 |
| 2 | 4 | 61.1 | 242 |
| 3 | 6 | 59.4 | 265 |
| 4 | 24 | 52.6 | 186 |
| 5 | 48 | 44.8 | 126 |

## Example 13

Measurement of acidities of various caustic leached spinels (CLS) are summarized in Table X. These measurements were made using temperature programmed desorption with t-butylamine described previously. The results indicate the CLS prepared with a short hot age time retain a greater percentage of acid sites after steaming, i.e. have greater steam stability, than do samples prepared with long reflux times. We do not know why the stability is reduced with longer hot age. However, we observe that longer aging causes readsorption of some of the silicate originally removed from the clay and this may migrate on steam deactivation resulting in blocking (encapsulation) of the acid sites.

## TABLE X

### Effect of Reflux Time on Stability of Acid Sites in Caustic Leached Spinel

| Time at Reflux (hrs.) | g NaOH/100 g Clay | Acidity/g | | % Retention | % $Al_2O_3$ |
|---|---|---|---|---|---|
| | | Fresh | S13.5 | | |
| 1 | 10 | 20.6 | 14.6 | 71 | about 50.6 |
| 1 | 15 | 17.5 | 16.2 | 93 | about 54.3 |
| 1 | 44 | 40.3 | 30.2 | 75 | about 70 |
| 6 | 62.8 | 51.6 | 12.2 | 24 | 59.4 |
| 24 | 41 | 29.7 | 15.6 | 52 | 48.0 |

## Example 14

This example shows that high surface area alumina rich materials can be produced from calcined clays which contain substantial amounts of mullite. Samples of kaolin were calcined for one-half hour at various temperatures and then caustic leached. 25 g of each material was slurried in 62.5 ml water containing 10.25 g sodium hydroxide, boiled under reflux for 1 hour, filtered, washed on the filter twice with 500 ml hot water, reslurried in 200 ml 0.25M $H_2SO_4$ for one-quarter hour at 150°F, filtered, washed twice with 500 ml hot water and oven dried. The data is summarized in Table XI.

TABLE XI

| Sample No. | Calcination Temperature (°F) | Predominant Phases (X-ray)[2] | Surface Area ($m^2$/g) | % $Al_2O_3$ |
|---|---|---|---|---|
| 1 | 2000 | 90% spinel (gamma alumina-like phase) and 10% mullite | 391 | 74.22 |
| 2 | 2100 | 75% spinel and 25% mullite | 245 | 74.99 |
| 3 | 2200 | 75% mullite and 25% spinel | 108 | 69.24 |

1. All samples for one-half hour at temperature.

2. Anatase, quartz were also present as impurities, quantities of spinel and mullite estimated by X-ray diffraction.

-30-

-31-

The above examples clearly indicate that valuable hydrocarbon processing catalysts and catalyst supports may be obtained using the teachings of the present invention.

WE CLAIM:

1. In a cracking catalyst composition which comprises a crystalline zeolite and inorganic oxide matrix, the improvement comprising including in said catalyst composition a finely divided, calcined caustic leached spinel/mullite component having a silica to alumina ratio of from about 0.5 to 1.7 and an acid site retention of from about 70 to 95 percent after treating at 1350°F in the presence of saturated steam.

2. The composition of claim 1 in which the spinel/mullite component has an alumina content of 50 to 75%, a surface area of about 150 to 350 $m^2$/g, a total pore volume of 0.30 to 1.00 cc/g, and is prepared by caustic leach of a clay calcined at a time and temperature such that the composition is predominantly in a spinel/mullite form.

3. The composition of claim 1 wherein said spinel/mullite component contains up to 50 mole percent mullite.

4. The composition of claim 3 which contains from about 5 to 30 percent by weight type Y zeolite.

5. The composition of claim 1 wherein said calcined leached spinel/mullite component has a particle size of from about 0.05 to 20 microns and is incorporated into the matrix of said catalyst as a separate, particulate component.

6. The catalyst of claim 1 wherein said catalyst contains from about 5 to 50 percent by weight of said calcined leached spinel/mullite.

-33-

7. The catalyst of claim 6 wherein the said calcined leached spinel/mullite has a microspheroidal particle shape, having a diameter of from about 20 to 200 microns, and is mixed with said catalyst as a separate particulate component.

8. A method for cracking hydrocarbons which comprises reacting a hydrocarbon feedstock under catalytic cracking conditions with the catalyst of claim 1.

9. The method of claim 8 wherein said hydrocarbon feedstock is a residual feedstock which contains from about 5 to 200 ppm vanadium and/or nickel.

10. A catalyst support comprising a calcined caustic leached spinel/mullite formed into particles having a size ranging from about 0.5 to 4 mm.

11. The support of claim 10 wherein said particles comprise extrudates, pills, granules and spheres.

12. The catalyst support of claim 11 having a surface area of from about 150 to 350 $m^2$/g and a total pore volume of from about 0.30 to 1.00 cc/g.

13. The catalyst support of claim 12 wherein said total pore volume is present in the following distribution: 0.20 to 0.60 cc/g in pores below 100 A°, 0.05 to 0.20 cc/g in pores 100 to 600 A° in diameter, and 0.10 to 0.50 cc/g in pores greater than 600 A° in diameter.

14. A hydroprocessing catalyst comprising the support of claim 10 in combination with metals selected from Groups VI and VIII of the Periodic Chart.

15. The composition of claim 13 wherein said metal is selected from the group consisting of cobalt, molybdenum, nickel, tungsten and mixtures thereof.

16. The catalyst of claim 15 wherein said metals are present in quantities ranging from about 0.01 to 0.20 parts by weight.

17. A spinel/mullite composition characterized by a silica to alumina ratio of from about 0.5 to 1.7 and an acid site retention of from about 70 to 95 percent after treating at 1350°F in the presence of saturated steam.

18. The composition of claim 17 which contains essentially 100 mole percent spinel.

19. The composition of claim 17 which contains 100 to 50 mole percent spinel and 0 to 50 mole percent mullite.

20. The composition of claim 17 which is derived from calcined caustic leached clay.

21. The composition of claim 20 wherein said clay is kaolin.